(19) Europäisches Patentamt / European Patent Office / Office européen des brevets

(11) **EP 4 383 941 A1**

(12) **EUROPÄISCHE PATENTANMELDUNG**

(43) Veröffentlichungstag:
**12.06.2024 Patentblatt 2024/24**

(21) Anmeldenummer: **22211419.1**

(22) Anmeldetag: **05.12.2022**

(51) Internationale Patentklassifikation (IPC):
**H05B 3/68** (2006.01)   **A47J 43/04** (2006.01)
**H05B 1/02** (2006.01)

(52) Gemeinsame Patentklassifikation (CPC):
**H05B 3/68; A47J 27/004; A47J 36/02;**
**A47J 43/0727; H05B 1/0261; H05B 3/688;**
A47J 2202/00; H05B 2203/017; H05B 2213/07

(84) Benannte Vertragsstaaten:
**AL AT BE BG CH CY CZ DE DK EE ES FI FR GB
GR HR HU IE IS IT LI LT LU LV MC ME MK MT NL
NO PL PT RO RS SE SI SK SM TR**
Benannte Erstreckungsstaaten:
**BA**
Benannte Validierungsstaaten:
**KH MA MD TN**

(71) Anmelder: **Vorwerk & Co. Interholding GmbH
42270 Wuppertal (DE)**

(72) Erfinder:
• **TIETZ, Sebastian
51379 Leverkusen (DE)**
• **REIß, Simon
51688 Wipperfürth (DE)**
• **BUGGELN, Christoph
40219 Düsseldorf (DE)**

(74) Vertreter: **Gille Hrabal Partnerschaftsgesellschaft
mbB
Patentanwälte
Brucknerstraße 20
40593 Düsseldorf (DE)**

(54) **KÜCHENGERÄT FÜR EIN ERHITZEN VON LEBENSMITTELN SOWIE HERSTELLUNGSVERFAHREN**

(57)     Die Erfindung betrifft ein Küchengerät für ein Erhitzen von Lebensmitteln mit einer Wand. In der Wand ist ein Heizleiter (3) für ein Erhitzen von Lebensmitteln vorhanden. Die Wand umfasst eine äußere erste Schicht (1). Eine zweite Schicht (2) der Wand befindet sich optional zwischen der ersten Schicht (1) und dem Heizleiter (3). Die Wärmeleitfähigkeit der zweiten Schicht (2) ist größer als die Wärmeleitfähigkeit der ersten Schicht (1). In der Wand ist ein erster Temperatursensor (5) vorhanden, der die erste Schicht (1) kontaktiert. In der Wand ist ein zweiter Temperatursensor (6) vorhanden, der optional getrennt von der ersten Schicht (1) angeordnet ist. Es kann genügen, dass der erste Temperatursensor (5) einen großen Abstand und der zweite Temperatursensor einen kleinen Abstand zu Heizleiterbahnen aufweist.

Die Erfindung betrifft auch ein Verfahren zur Herstellung des Küchengeräts (7) wobei der erste Temperatursensor (5) und der zweite Temperatursensor (6) kalibriert werden.

Durch das Küchengerät können Zieltemperaturen sehr genau eingestellt werden.

**FIG. 1**

EP 4 383 941 A1

**Beschreibung**

Die Erfindung betrifft ein Küchengerät für ein Erhitzen von Lebensmitteln. Die Erfindung betrifft außerdem ein Verfahren für ein Herstellen des Küchengeräts.

Aus den Druckschriften EP 3498136 B1 sowie WO 2020/000052 A1 sind Küchengeräte mit elektrischen Heizeinrichtungen und Temperaturelementen bekannt.

Durch die vorliegende Erfindung soll ein Küchengerät geschaffen werden, das robust ist, das technisch einfach hergestellt werden kann und das Temperaturen besonders geeignet ermitteln kann, um Lebensmittel geeignet erhitzen zu können.

Zur Lösung der Aufgabe kann ein Küchengerät für ein Erhitzen von Lebensmitteln vorgesehen sein. Ein Küchengerät ist ein Gerät, welches in einer Küche zur Zubereitung von Lebensmitteln eingesetzt wird. Beispiele für ein Küchengerät für ein Erhitzen von Lebensmitteln sind ein Backofen, ein Grill, eine Mikrowelle, ein Kaffeeautomat, eine Küchenmaschine oder ein Kochfeld.

Das Küchengerät kann eine Wand umfassen. Mit Wand ist ein flächiges Bauteil mit einer geschlossenen Oberfläche gemeint. Eine Wand ist aufgrund der geschlossenen Oberfläche flüssigkeitsdicht. Die Wand kann Teil eines Garraums oder eines Zubereitungsgefäßes des Küchengeräts sein. Die Wand kann eine seitliche Wand eines Garraums oder eines Zubereitungsgefäßes sein. Die Wand kann den Boden eines Garraums oder den Boden eines Zubereitungsgefäßes bilden. Die Wand kann die Decke eines Garraums bilden.

Das Küchengerät kann ein oder mehrere Heizleiter für ein Erhitzen des Lebensmittels umfassen. Ein Heizleiter ist ein länglicher Gegenstand, der erhitzt werden und entlang einer Linie verlaufen kann. Die Linie kann ein Kreis oder ein Teilkreis sein. Der Heizleiter verläuft dann entlang einer Kreisform bzw. entlang eines Teilkreises. Die Linie kann bogenförmig verlaufen. Der Heizleiter verläuft dann entlang einer Bogenform. Ein Heizleiter kann beispielsweise ein elektrischer Leiter sein, der sich erhitzt, wenn elektrischer Strom durch den elektrischen Leiter fließt. Ein solcher Heizleiter kann aus einer Heizleiterlegierung bestehen. Der elektrische Widerstand eines Heizleiters kann bei 20°C wenigstens

$$0{,}2\ \frac{\Omega \cdot \mathrm{mm}^2}{\mathrm{m}}\ \text{oder wenigstens}\ 0{,}5\ \frac{\Omega \cdot \mathrm{mm}^2}{\mathrm{m}}\ \text{oder wenigstens}\ 1\ \frac{\Omega \cdot \mathrm{mm}^2}{\mathrm{m}}$$

betragen. Ein Heizleiter kann ein Röhrchen sein, durch welches ein heißes Medium wie zum Beispiel erhitztes Öl hindurchströmen kann. Das Röhrchen kann aus Metall bestehen. Ein Heizleiter kann bahnförmig hin und her verlaufen, um eine Fläche erhitzen zu können.

In der Wand können die ein oder mehreren Heizleiter vorhanden sein. Ein Heizleiter, der in einer Wand vorhanden ist, ist von außen nicht erreichbar. Die Wand schützt dann den Heizleiter vor äußeren Einflüssen.

Die Wand kann eine erste Schicht umfassen. Mit Schicht ist eine flächenhaft ausgebreitete Masse eines Stoffes gemeint. Die erste Schicht ist eine äußere Schicht und damit von außen sichtbar und von außen erreichbar.

Die Wand kann eine zweite Schicht umfassen. Die zweite Schicht der Wand kann sich zwischen der ersten Schicht und den ein oder mehreren Heizleitern befinden. Die zweite Schicht trennt dann die Heizleiter von der ersten Schicht. Es gibt dann keinen unmittelbaren Kontakt zwischen dem bzw. den Heizleitern und der ersten Schicht. Grundsätzlich ist die zweite Schicht in der Wand und damit von außen nicht erreichbar und grundsätzlich auch nicht sichtbar. Die zweite Schicht ist also dann keine äußere Schicht der Wand.

In der Wand kann ein erster Temperatursensor vorhanden sein. Ist ein Temperatursensor in der Wand vorhanden, dann befindet sich der Temperatursensor zwischen zwei Schichten im Inneren der Wand. Ein Teil des Temperatursensors steht dann nicht von der Wand nach außen ab. Ein Temperatursensor reicht folglich nicht durch eine Schicht der Wand hindurch. Der Temperatursensor wird also dann durch die Wand vor Beschädigungen geschützt. Hierdurch unterscheidet sich die vorliegende Erfindung beispielsweise von dem aus der Druckschrift EP 3813616 A1 bzw. WO 2020000052 A1 bekannten Stand der Technik.

Ein Temperatursensor ist ein Bauelement, durch das eine Temperatur ermittelt werden kann. Ein Temperatursensor kann ein Bauelement sein, das ein elektrisches Signal als Maß für eine Temperatur erzeugen kann. Ein in der Wand vorhandener Temperatursensor ist so vorhanden und eingerichtet, dass eine Steuereinrichtung von dem Temperatursensor das Maß für die Temperatur für ein Regeln des Küchengeräts erhalten kann. Es können von außen erreichbare elektrische Kontakte vorhanden sein, über die der Temperatursensor mit elektrischen Kontakten der Steuereinrichtung elektrisch verbunden werden kann. Die Steuereinrichtung kann in Abhängigkeit von dem Maß für die Temperatur den Betrieb des Küchengeräts regeln, wenn die elektrischen Kontakte der Steuereinrichtung mit den elektrischen Kontakten des Temperatursensors verbunden sind. Eine Steuereinrichtung kann aber auch dauerhaft mit dem Temperatursensor so verbunden sein, dass die Steuereinrichtung in Abhängigkeit von der Temperatur den Betrieb des Küchengeräts regeln kann.

Der erste Temperatursensor kann die erste Schicht kontaktieren. Kontaktiert der erste Temperatursensor die erste Schicht, dann gibt es eine unmittelbare körperliche Verbindung zwischen dem ersten Temperatursensor und der ersten Schicht. Durch das Kontaktieren wird erreicht werden, dass mit dem ersten Temperatursensor eine Temperatur der ersten Schicht gemessen werden kann, oder zumindest eine Temperatur, die der Temperatur der ersten Schicht nahekommt.

In der Wand kann ein zweiter Temperatursensor vorhanden sein. Der zweite Temperatursensor kann getrennt von der ersten Schicht angeordnet sein. Der zweite Temperatursensor kann an die zweite Schicht angrenzen. Nur die zweite Schicht trennt dann den zweiten Temperatursensor von der ersten Schicht. Ist der zweite Sensor getrennt von der ersten Schicht angeordnet, dann gibt es keine unmittelbare körperliche Verbindung zwischen dem zweiten Temperatursensor und der ersten Schicht. Es wird dadurch erreicht, dass durch den zweiten Temperatursensor eine Temperatur ermittelt wird, die im Inneren der Wand herrscht.

Durch die beschriebene Anordnung der beiden Temperatursensoren wird während des Erhitzens der ein oder mehreren Heizleiter erreicht, dass der erste Temperatursensor während der üblichen Zubereitung von Lebensmitteln eine Temperatur misst, die unterhalb der Temperatur liegt, die durch den zweiten Temperatursensor gemessen wird. Durch den ersten Temperatursensor wird eine Temperatur ermittelt, die der Temperatur der ersten Schicht beim Ort der Messung zumindest nahekommt. Der erste Temperatursensor kann damit eine Information darüber liefern, welche Temperatur auf ein Lebensmittel während seiner Zubereitung einwirkt. Durch den zweiten Temperatursensor wird eine Temperatur ermittelt, die im Inneren der Wand herrscht. Der zweite Temperatursensor kann damit eine Information darüber liefern, wie sich die Temperatur der ersten Schicht und damit auch der Wand verändern wird. Insgesamt kann daher verbessert abgeschätzt werden, wie sich die Temperatur der ersten Schicht und damit auch der Wand verhalten wird. Dies kann genutzt werden, um ein Lebensmittel in besonders geeigneter Weise erhitzen zu können. Es kann beispielsweise eine Restwärme ausgenutzt werden, um den Energiebedarf für eine Zubereitung eines Lebensmittels durch Erhitzen zu minimieren.

Der Abstand zwischen dem ersten Temperatursensor und einem benachbarten Heizleiter kann größer sein als der Abstand zwischen dem zweiten Temperatursensor und einem benachbarten Heizleiter. Der erste Temperatursensor ist dann von Heizleitern weiter entfernt als der zweite Temperatursensor. Auch so kann alternativ oder ergänzend erreicht werden, dass der erste Temperatursensor die Temperatur der ersten Wand ermittelt und der zweite Temperatursensor die Temperatur, die im Inneren der Wand durch die ein oder mehreren Heizleiter erzeugt wird.

Der zweite Temperatursensor kann die zweite Schicht kontaktieren. Die Temperatur, die der zweite Temperatursensor misst, entspricht dann der Temperatur der zweiten Schicht oder kommt dann dieser Temperatur zumindest nahe.

Der Heizleiter kann die zweite Schicht kontaktieren. Während eines Erhitzens wird so erreicht, dass sich die Temperatur der zweiten Schicht und die Temperatur des Heizleiters besonders gut aneinander angleichen. Ein lokales Erhitzen im Inneren der Wand wird vorteilhaft so besonders gut vermieden.

Der Heizleiter kann von der zweiten Schicht nur durch einen elektrischen Isolator getrennt sein. Diese Ausgestaltung ist von Bedeutung, wenn der Heizleiter ein elektrischer Heizleiter ist und die zweite Schicht aus einem elektrisch leitenden Material besteht. Ein lokales Erhitzen im Inneren der Wand wird vorteilhaft so besonders gut vermieden.

Die Messgenauigkeit des ersten Temperatursensors kann bei einer ersten Temperatur am größten sein und die Messgenauigkeit des zweiten Temperatursensors kann bei einer zweiten Temperatur am größten sein. Die zweite Temperatur kann größer als die erste Temperatur sein. Beispielsweise kann der erste Temperatursensor eine Temperatur von 100°C mit einer Genauigkeit von $\pm$0,5°C messen und jede andere Temperatur mit einer geringeren Genauigkeit. Die erste Temperatur ist dann 100°C. Beispielsweise kann der zweite Temperatursensor eine Temperatur von 200°C mit einer Genauigkeit von $\pm$0,5°C messen und jede andere Temperatur mit einer geringeren Genauigkeit. Die zweite Temperatur ist dann 200°C und damit größer als die erste Temperatur. Die Messgenauigkeit des ersten Temperatursensors kann bei der ersten Temperatur am größten sein, weil der erste Sensor bei der ersten Temperatur kalibriert worden ist. Die Messgenauigkeit des zweiten Temperatursensors kann bei der zweiten Temperatur am größten sein, weil der zweite Sensor bei der zweiten Temperatur kalibriert worden ist. Die zweite Temperatur ist vorteilhaft größer als die erste Temperatur, weil durch den zweiten Temperatursensor höhere Temperaturen gemessen werden sollen als durch den ersten Temperatursensor.

Die Differenz zwischen der ersten Temperatur und der zweiten Temperatur kann mehr als 20°C oder mehr als 50°C oder mehr als 90°C betragen. Die Differenz zwischen der ersten Temperatur und der zweiten Temperatur kann nicht mehr als 150°C oder nicht mehr als 120°C betragen. Diese Differenzen können während einer Aufheizphase auftreten. Dies berücksichtigt, welche Temperaturdifferenzen zwischen der ersten und der zweiten Temperatur von besonderem Interesse sind, um eine Lebensmittelzubereitung durch Erhitzen optimieren zu können. Nach einer Aufheizphase kann die Differenz deutlich kleiner sein. Die Differenz kann dann beispielsweise nur 2°C oder nur 3°C oder nur 4°C betragen. Die Differenz kann nach einer Aufheizphase beispielsweise maximal 20°C oder maximal 18°C oder maximal 15°C betragen. Während der Aufheizphase kann die Differenz auch variieren, wobei diese Differenz in einer Ausführung abhängig von der aktuellen gemessenen Temperatur durch den ersten und/oder zweiten Temperatursensor sein kann.

Der erste Temperatursensor und/oder der zweite Temperatursensor können durch eine Feder gegen die erste bzw. ggfs. zweite Schicht gedrückt sein. Die Feder ist dann vorgespannt. Wird ein Temperatursensor mithilfe einer Feder gegen eine Schicht gedrückt. Dadurch wird eine gute thermische Anbindung durch eine ausreichende große Anpresskraft sichergestellt, sodass keine großen Wärmewiderstände in Form von Luftbrücken entstehen können und somit wird das Messignal nicht verzögert bzw. durch einen Offset verfälscht. Dadurch wird eine gute thermische Anbindung für eine genaue Temperaturbestimmung erreicht. Das Halten ist gegenüber thermischen Spannungen unempfindlich. Es kann im Fall des ersten Temperatursensors so verbessert erreicht werden, dass der erste Temperatursensor schnell eine Temperatur messen kann, die der Temperatur der ersten Wand entspricht. Es kann im Fall des zweiten Temperatursensors so verbessert erreicht werden, dass der zweite Temperatursensor schnell eine Temperatur messen kann, die der Temperatur der zweiten Wand entspricht.

Der erste Temperatursensor kann so angeordnet sein, dass dieser die zweite Schicht nicht kontaktiert. Es kann so verbessert erreicht werden, dass der erste Temperatursensor eine Temperatur misst, die der Temperatur der ersten Wand entspricht.

Der erste Temperatursensor kann nicht zwischen zwei Heizleiterbahnen angeordnet sein. Es wird so vorteilhaft verbessert erreicht, dass die Temperatur, die der erste Temperatursensor misst, möglichst wenig von Temperaturen der ein oder mehreren Heizleiter beeinflusst wird.

Der zweite Temperatursensor kann zwischen zwei Heizleiterbahnen angeordnet sein. Es wird so vorteilhaft verbessert erreicht, dass die Temperatur, die der zweite Temperatursensor ermittelt, möglichst den Temperaturen der ein oder mehreren Heizleiter entspricht.

Die erste Schicht kann aus Stahl bestehen. Die erste Schicht kann aus einem Edelstahl bestehen. Sämtliche außen liegenden Flächen der Wand können aus Stahl, so zum Beispiel aus Edelstahl, bestehen. Die Wand wird dadurch vorteilhaft besonders stabil. Die zweite Schicht kann aus Kupfer oder Aluminium bestehen oder Kupfer oder Aluminium umfassen, weil die Wärmeleitfähigkeit von Kupfer oder Aluminium vorteilhaft groß ist.

Das Küchengerät kann eine Steuereinrichtung umfassen. Die Steuereinrichtung kann den Betrieb des Küchengeräts und/oder eines anderen Geräts steuern. Die Steuereinrichtung kann beispielsweise so eingerichtet sein, dass diese das Erhitzen der Heizleiter regeln kann. Die Steuereinrichtung kann beispielsweise so eingerichtet sein, dass eine Temperatur von einem Benutzer ausgewählt werden kann. Im Anschluss daran steuert die Steuereinrichtung das Erhitzen so, dass die gewählte Temperatur erreicht und danach eingehalten wird. Die Steuereinrichtung kann beispielsweise so eingerichtet sein, dass eine Temperatur durch ein elektronisch gespeichertes Rezept eine Temperatur vorgegeben kann. Im Anschluss daran steuert die Steuereinrichtung das Erhitzen so, dass die vorgegebene Temperatur erreicht und danach eingehalten wird.

Die Steuereinrichtung kann so eingerichtet sein, dass diese ein Erhitzen durch die Heizleiter in Abhängigkeit von dem ersten und dem zweiten Temperatursensor während der Zubereitung von Lebensmitteln steuert. Die Steuereinrichtung kann dadurch die Zubereitung von Lebensmitteln nicht nur in Abhängigkeit von der Temperatur regeln, die unmittelbar auf ein Lebensmittel einwirkt, sondern auch in Abhängigkeit von zu erwartenden Temperaturänderungen aufgrund der Temperatur, die im Inneren der Wand herrscht. Lebensmittel können so verbessert durch Erhitzen gesteuert werden.

Die Steuereinrichtung kann so eingerichtet sein, dass diese das Einstellen einer Zieltemperatur mit dem ersten Temperatursensor steuert, wenn die Zieltemperatur gering ist. Die Steuereinrichtung kann so eingerichtet sein, dass diese das Einstellen einer Zieltemperatur mit dem zweiten Temperatursensor steuert, wenn die Zieltemperatur groß ist. Dies gilt vor allem dann, wenn der erste Temperatursensor bei einer Temperatur kalibriert worden ist, die kleiner als die Temperatur ist, bei der der zweite Temperatursensor kalibriert worden ist. Eine geringe Zieltemperatur kann beispielsweise kleiner als 130°C sein. Eine große Zieltemperatur ist dann größer als 130°C.

Die Steuereinrichtung kann so eingerichtet sein, dass diese das Einstellen einer Zieltemperatur mit dem ersten Temperatursensor steuert, wenn eine Flüssigkeit sieden oder kochen soll. Die Steuereinrichtung kann so eingerichtet sein, dass diese das Einstellen einer Zieltemperatur mit dem zweiten Temperatursensor steuert, wenn ein Lebensmittel wie zum Beispiel Fleisch angebraten werden soll.

Die Steuereinrichtung kann so eingerichtet sein, dass diese ein Erhitzen durch die ein oder mehreren Heizleiter abschaltet, wenn der erste Temperatursensor eine Temperatur oberhalb eines ersten Schwellwerts misst. Alternativ oder ergänzend kann die Steuereinrichtung so eingerichtet sein, dass diese ein Erhitzen durch die ein oder mehreren Heizleiter abschaltet, wenn der zweite Temperatursensor eine Temperatur oberhalb eines zweiten Schwellwerts misst. Ein unerwünschtes Überhitzen kann so vermieden werden.

Die Steuereinrichtung kann beispielsweise so eingerichtet sein, dass diese das Erhitzen von Heizleitern abschaltet, sobald die Temperatur der zweiten Schicht eine Temperatur von 295°C oder 290°C erreicht und zwar unter Berücksichtigung der Messgenauigkeit des ersten und/oder des zweiten Temperatursensors.

Der erste Schwellwert kann kleiner als der zweite Schwellwert sein. Es wird dann berücksichtigt, dass der erste Temperatursensor grundsätzlich niedrigere Temperaturen als der zweite Temperatursensor ermittelt. Ein unerwünschtes Überhitzen kann so weiter verbessert vermieden werden.

Der erste Schwellwert kann größer als 180°C und/oder kleiner als 280°C sein, um ein unerwünschtes Überhitzen zu vermeiden. Der erste Schwellwert kann größer als 200°C und/oder kleiner als 295°C sein, um ein unerwünschtes Überhitzen zu vermeiden. Der erste Schwellwert kann größer als 240°C und/oder kleiner als 250°C sein, um ein unerwünschtes Überhitzen zu vermeiden. Der erste Schwellwert kann 245°C sein. Der zweite Schwellwert kann größer als 240°C und/oder kleiner als 320°C sein, um ein unerwünschtes Überhitzen zu vermeiden. Der zweite Schwellwert kann größer als 250°C und/oder kleiner als 270°C sein, um ein unerwünschtes Überhitzen zu vermeiden. Der zweite Schwellwert kann 260°C sein.

Die Messgenauigkeit der beiden Temperatursensoren wird bei der Wahl der Temperatur, bei der abgeschaltet wird, in einer Ausgestaltung berücksichtigt. Soll beispielsweise die Temperatur der ein oder mehreren Heizleiter 260°C nicht überschreiten und beträgt die Messgenauigkeit des zweiten Temperatursensors bei 260°C beispielsweise ±4°C, so wird beispielsweise 255°C oder 256°C als Schwellwert für den zweiten Temperatursensor ausgewählt.

Die Wärmeleitfähigkeit der zweiten Schicht kann größer als die Wärmeleitfähigkeit der ersten Schicht sein. Die Wärmeleitfähigkeit ist eine Stoffeigenschaft, die den Wärmestrom durch ein Material auf Grund der Wärmeleitung bestimmt. Ist die Wärmeleitfähigkeit der zweiten Schicht größer als die Wärmeleitfähigkeit der ersten Schicht, dann breitet sich eine Erwärmung in der zweiten Schicht schneller aus als eine gleiche Erwärmung in der ersten Schicht, wenn beide Schichten gleich dimensioniert sind. Die Wärmeleitfähigkeit hat im SI-System die Einheit Watt pro Meter und Kelvin. Werden die ein oder mehreren Heizleiter erhitzt, so bewirkt die zweite Schicht ein besonders gleichmäßiges Erhitzen der ersten Schicht. Ein nachteilhaftes lokales Erhitzen der ersten Schicht kann also vermieden werden.

Die zweite Schicht kann dicker als die erste Schicht sein. Es kann so weiter verbessert erreicht werden, dass die erste Schicht besonders gleichmäßig erhitzt wird. Die zweite Schicht kann beispielsweise wenigstens doppelt so dick sein oder wenigstens dreimal so dick sein wie die erste Schicht. Eine technisch sinnvolle Obergrenze ist, dass die zweite Schicht nicht mehr als siebenmal oder nicht mehr als sechsmal so dick wie die erste Schicht ist. Die zweite Schicht kann fünfmal so dick wie die erste Schicht sein.

Das Küchengerät kann eine Küchenmaschine mit einem Standteil, mit einem in das Standteil einsetzbarem Zubereitungsgefäß und mit einer Zerkleinerungs- und/ oder Mischeinrichtung sein. Das Zubereitungsgefäß umfasst die Wand. In dem Zubereitungsgefäß befindliche Lebensmittel werden erhitzt, wenn die ein oder mehreren Heizleiter in der Wand erhitzt werden. Mithilfe der Zerkleinerungs- und/ oder Mischeinrichtung kann ein im Speisenzubereitungsgefäß befindliches Lebensmittel zerkleinert und/oder gemischt werden. Die Zerkleinerungs- und/ oder Mischeinrichtung kann ein Rühr- und/oder Schneidwerkzeug umfassen. Die Zerkleinerungs- und/ oder Mischeinrichtung kann einen elektrischen Antrieb für das Rühr- und/oder Schneidwerkzeug umfassen. Im Standteil kann der elektrische Antrieb für das Rühr- und/oder Schneidwerkzeug sein. Die vorgenannte Steuereinrichtung kann beispielsweise in dem Standteil angeordnet sein. Die Steuereinrichtung kann so eingerichtet sein, dass die Steuereinrichtung den elektrischen Antrieb steuern kann, so zum Beispiel in Abhängigkeit von einem elektronisch gespeicherten Rezept, durch das vorgegeben wird, wie ein Lebensmittel zubereitet wird.

Die Erfindung betrifft auch ein Verfahren zur Herstellung eines Küchengeräts. Die Herstellung umfasst, dass der erste Temperatursensor und der zweite Temperatursensor kalibriert werden, wobei die maximale Kalibrierungstemperatur des ersten Temperatursensors kleiner ist als die maximale Kalibrierungstemperatur des zweiten Temperatursensors sein kann. In einer Alternativen sind die Kalibrierungstemperaturen für beide Temperatursensoren gleich. und betragen beispielsweise 120°C. Durch das Kalibrieren wird ein Temperatursensor mit einem Referenztemperatursensor verglichen. Wird ein Temperatursensor beispielsweise bei einer Kalibrierungstemperatur von beispielsweise 100°C kalibriert, dann wird eine Temperatur erzeugt, bei der der Referenztemperatursensor 100°C anzeigt. Im Anschluss daran wird das Signal ermittelt, dass der Temperatursensor erzeugt. Es wird nun gespeichert, dass dieses Signal bedeutet, dass eine Temperatur von 100°C herrscht. Da ein Referenztemperatursensor so eingerichtet wird, dass dieser sehr genau gewünschte Temperaturen messen kann, misst nach der Kalibrierung auch der kalibrierte Temperatursensor zumindest die Kalibrierungstemperatur sehr genau.

Die maximale Kalibrierungstemperatur des ersten Temperatursensors kann vorteilhaft zwischen 50°C und 150 °C oder zwischen 80°C und 120 °C liegen. Die maximale Kalibrierungstemperatur des zweiten Temperatursensors kann vorteilhaft zwischen 150°C und 250 °C oder zwischen 180°C und 220 °C liegen.

Ein jeder Temperatursensor kann bei mehreren verschiedenen Kalibrierungstemperaturen kalibriert worden sein. Es ist auch möglich, dass die maximale Kalibrierungstemperatur des ersten Temperatursensors lediglich anders ist als die maximale Kalibrierungstemperatur des zweiten Temperatursensors.

Ein Temperatursensor kann so ausgelegt sein, dass der Temperatursensor eine bestimmte Temperatur am genauesten messen kann. Diese Temperatur wird Arbeitspunkt mit der höchsten Genauigkeit genannt. Ist der Arbeitspunkt mit der höchsten Genauigkeit beispielsweise herstellungsbedingt 100°C, dann kann der Sensor die Temperatur von 100°C genauer messen als andere Temperaturen. Beispielsweise kann dann der Sensor eine Temperatur von 100°C mit ±0,5°C Genauigkeit messen, aber eine Temperatur von 50°C mit einer Genauigkeit von beispielsweise lediglich ±2°C sowie eine Temperatur von 150°C mit einer Genauigkeit von beispielsweise lediglich ±3,5°C. Vorzugsweise ist der Arbeitspunkt mit der höchsten Genauigkeit des ersten Temperatursensors kleiner als der Arbeitspunkt mit der höchsten Genauigkeit des zweiten Temperatursensors. Der erste Temperatursensor ist also beispielsweise so hergestellt worden, dass dieser 100°C besonders genau messen kann. Sein Arbeitspunkt mit der höchsten Genauigkeit ist dann 100°C. Der zweite Temperatursensor ist dann beispielsweise so hergestellt worden, dass dieser 200°C besonders genau messen kann. Sein Arbeitspunkt mit der höchsten Genauigkeit ist dann 200°C und somit größer als beim ersten Temperatursensor. Es kann so die Genauigkeit der Temperaturmessungen weiter verbessert werden.

Vorzugsweise wird der erste Temperatursensor beim Arbeitspunkt mit der höchsten Genauigkeit des ersten Temperatursensors kalibriert. Vorzugsweise wird der zweite Temperatursensor beim Arbeitspunkt mit der höchsten Genauigkeit des zweiten Temperatursensors kalibriert. Mit "beim Arbeitspunkt mit der höchsten Genauigkeit" ist gemeint, dass die Kalibrierungstemperatur der Temperatur entspricht, die werkseitig beispielsweise vom Hersteller des Temperatursensors als Arbeitspunkt mit der höchsten Genauigkeit angegeben wird. Der Arbeitspunkt mit der höchsten Genauigkeit kann die maximale Temperatur sein, mit der ein Temperatursensor kalibriert wird. Dies ist insbesondere dann der Fall, wenn bei nur einer Temperatur kalibriert wird.

Die Temperatursensoren können beispielsweise NTC (Negative Temperature Coefficient) - Sensoren und/oder PTC (Positive Temperature Coefficient) - Sensoren sein.

Durch die Erfindung wird erreicht, dass Temperatursensoren nicht nur genutzt werden können, um eine Zubereitung von Lebensmittel verbessert steuern zu können, sondern auch aus Sicherheitsgründen bei Überschreiten von übermäßig hohen Temperaturen. Es müssen keine Kompromisse bei der Auslegung eines Temperatursensors in Kauf genommen werden. Es kann sehr genau die Temperatur ermittelt werden, denen Lebensmittel während der Zubereitung ausgesetzt werden, ohne dass dafür ein Erhitzen von Heizleitern abgeschaltet werden müsste. Es müssen also keine zeitlichen Verzögerungen in Kauf genommen werden. Außerdem ist dann der Aufwand für eine Programmierung gering. Die Temperatursensoren sind vor äußeren Einflüssen gut geschützt. Es müssen keine Dichtigkeitsrisiken aufgrund von Temperatursensoren in Kauf genommen werden, da sich die Temperatursensoren vollständig im Inneren der Wand befinden und folglich nicht aus der Wand herausragen. Ungleichmäßige Wärmeverteilungen um einen Temperatursensor herum können vermieden werden. Der Kalibrierungsaufwand für die Temperatursensoren kann geringgehalten werden, da es genügt, einen jeden Temperatursensor bei nur einer Temperatur zu kalibrieren. Der Kalibrierungsaufwand ist besonders gering, wenn bei nur einer Temperatur kalibriert wird, die beispielsweise zwischen 90°C und 150°C liegen kann. In der Wand vorhandene Wärmeenergie kann ermittelt und bei der Zubereitung von Lebensmitteln berücksichtigt werden. Es kann so ein nachteilhaftes Überschwingen einer Temperatur der ersten Schicht vermieden werden. Temperaturen können sehr zielgenau über einen großen Temperaturbereich von zum Beispiel -30°C bis 225°C eingestellt werden. Ein großer Temperaturbereich kann sehr genau eingestellt werden, da in Abhängigkeit von der Zieltemperatur der eine oder der andere Temperatursensor für ein Regeln verwendet werden kann. Dies gilt vor allem für den Fall, dass die beiden Temperatursensoren bei unterschiedlichen Temperaturen kalibriert worden sind. Es kann also beispielsweise abgeschätzt werden, wann frühestens das Erhitzen von ein oder mehreren Heizleitern abgeschaltet werden kann, um Restenergie für die Zubereitung nutzen zu können. Es kann vorteilhaft durch eine Kaskadenregelung oder durch einen Zustandsregler geeignet gesteuert werden. Die Erfindung kann mit unterschiedlichen Heizleitern realisiert werden. Die erste Schicht kann als Auflagefläche für Lebensmittel genutzt werden. Auf Sicherheitsschalter wie Bimetallschalter oder Schmelzsicherung kann verzichtet werden.

Es zeigen

Figur 1:    Schichtsystem mit Heizleiter und Temperatursensoren;
Figur 2:    Küchenmaschine;
Figur 3:    weiteres Schichtsystem mit Heizleiter und Temperatursensoren;
Figur 4:    Schnitt durch ein System mit zwei Schichten;
Figur 5:    Schnitt durch ein System mit zwei Schichten;
Figur 6:    Schnitt durch ein System mit zwei Schichten;
Figur 7:    Schnitt durch Ausschnitt einer Wand;
Figur 8:    Messgenauigkeit von erstem und zweitem Temperatursensor;
Figur 9:    Schicht mit Heizleiter und Temperatursensoren.

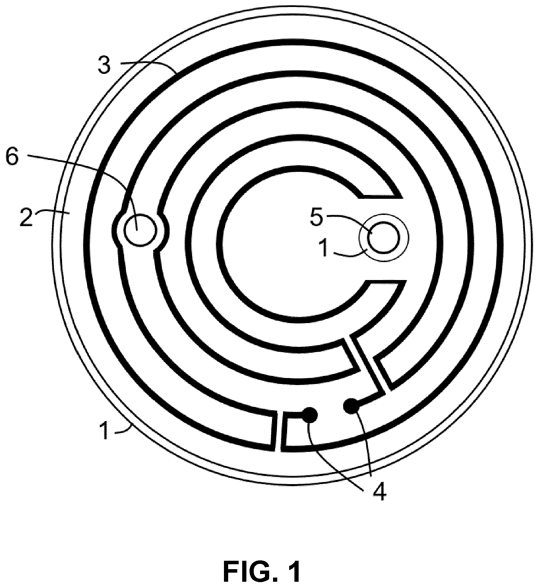

Die Figur 1 zeigt eine Aufsicht auf eine erste Schicht 1, auf der eine zweite Schicht 2 aufgebracht ist. Die erste Schicht 1 besteht aus einem anderen Material als die zweite Schicht 2. In der zweiten Schicht 2 befindet sich eine Öffnung, durch die hindurch die erste Schicht 1 zu sehen ist. Ein elektrischer Heizleiter 3 mit elektrischen Kontakten 4 ist auf der zweiten Schicht 2 aufgebracht. Der Heizleiter 3 kann eine Dickschichtheizung bilden. Der elektrische Heizleiter 3 verläuft überwiegend entlang von kreisförmigen Bahnen, um die zweite Schicht 2 flächig erhitzen zu können. Der elektrische Heizleiter 3 weist an seinen beiden Enden elektrische Kontakte 3 auf. Die elektrischen Kontakte 3 können mit einer Stromquelle für ein Erhitzen der Heizleiter verbunden werden. Ein erster Temperatursensor 5 befindet auf der ersten Schicht 1 innerhalb der Öffnung der zweiten Schicht 2. Der Temperatursensor 5 kontaktiert daher die erste Schicht 1. Der Rand der Öffnung der zweiten Schicht 2 berührt den ersten Temperatursensor 5 nicht. Es gibt daher keinen Kontakt zwischen der zweiten Schicht 2 und dem ersten Temperatursensor 5. Der erste Temperatursensor 5 ist entfernt von Bahnen des Heizleiters 3 angeordnet. Ein zweiter Temperatursensor 6 befindet auf der zweiten Schicht 2 in unmittelbarer Nähe von zwei Bahnen des Heizleiters 3. Bahnen des Heizleiters 3 können abschnittsweise kreisförmig um den zweiten Temperatursensor 6 herumgeführt sein, um Heizleitertemperaturen weiter verbessert durch den zweiten Temperatursensor ermitteln zu können. Der Abstand des zweiten Temperatursensors 6 zum Heizleiter 3 ist geringer als der Abstand zwischen dem ersten Temperatursensor 5 und dem Heizleiter 3.

Der Heizleiter 3 kann mit einer elektrischen Isolierung versehen sein, die den Heizleiter 3 von der zweiten Schicht 2 elektrisch trennt. Zwischen dem Heizleiter 3 und der zweiten Schicht 2 kann eine elektrisch isolierende Schicht vorhanden sein. Auf dem Heizleiter 3 oder oberhalb des Heizleiters 3 ist zumindest eine weitere Schicht vorhanden, die eine äußere Schicht der Wand ist. Die erste Schicht 1 und zumindest die eine weitere Schicht können aus Stahl bestehen. Die zweite Schicht 2 kann aus Aluminium oder Kupfer bestehen oder Aluminium oder Kupfer umfassen. Insgesamt kann so eine Wand gebildet werden, die Teil eines Küchengeräts ist.

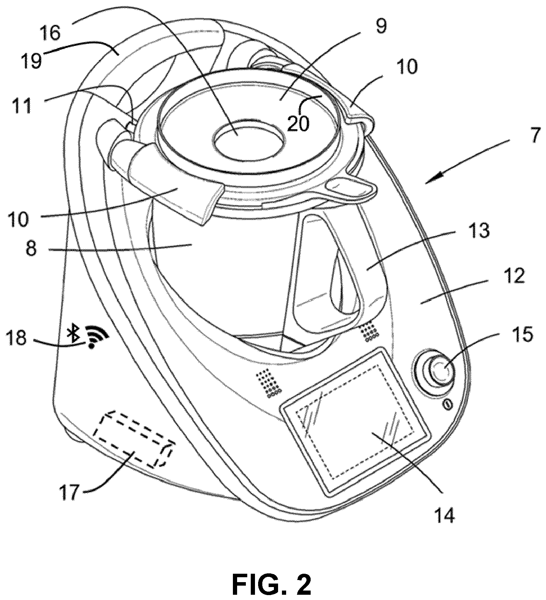

Die Figur 2 zeigt eine Küchenmaschine 7 als Beispiel für ein Küchengerät mit einem Speisenzubereitungsgefäß 8. Auf dem Speisenzubereitungsgefäß 8 ist ein Deckelteil 9 aufgesetzt. Das Deckelteil 9 für das Speisenzubereitungsgefäß 8 ist durch Arme 10, verriegelt. Das Deckelteil 9 befindet sich zwischen den beiden Armen 10. Die Arme 10 können um ihre Längsachse durch einen Motor der Küchenmaschine gedreht werden und so hin und her zwischen einer Öffnungsstellung und einer Verriegelungsstellung. Das Deckelteil 9 hat einen Sensor und zwar einen Kipphebel 11 eines elektrischen Schalters heruntergedrückt und so ausgelöst. Die Arme 10 und der Kipphebel 11 sind an einem Standteil 12 der Küchenmaschine 7 angebracht. Das Speisenzubereitungsgefäß 8 ist in das Standteil 12 eingesetzt und kann aus dem Standteil 12 herausgenommen werden. Um das Speisenzubereitungsgefäß 8 herausnehmen zu können, umfasst dieses einen Griff 13. Das Standteil 12 umfasst zur Bedienung ein berührungsempfindliches Display 14 und einen Drehschalter 15. Der Drehschalter 15 kann gedreht und gedrückt werden. Display 14 und Drehschalter 15 sind also Bedienelemente der Küchenmaschine 7. Über die Bedienelemente 14 und 15 können Daten eingegeben werden. Das Deckelteil 9 umfasst mittig eine Öffnung 16, die mit einem nicht gezeigten zum Beispiel gefäßartigen Verschluss verschlossen werden kann.

Im Standteil 12 befindet sich eine Steuereinrichtung 17. Im Standteil 12 befindet sich eine Funkeinrichtung 18, über die Daten drahtlos gesendet und empfangen werden können. Die Funkeinrichtung 18 kann beispielsweise per Bluetooth und/oder WiFi Daten senden sowie empfangen. Über die Funkeinrichtung 18 kann die Steuereinrichtung 17 beispielsweise auf ein extern elektronisch gespeichertes Rezept zugreifen. Die Steuereinrichtung 17 kann mithilfe des Rezepts die Zubereitung einer Speise steuern. Rezepte können aber auch in einer Speichereinheit der Steuereinrichtung alternativ oder ergänzend gespeichert sein. Die Steuereinrichtung 17 kann den Betrieb der Küchenmaschine 7 und/oder den Betrieb eines anderen Küchengeräts steuern. Die Steuereinrichtung 17 kann Informationen über Temperaturen von den beiden Temperatursensoren 5 und 6 erhalten. Die Steuereinrichtung kann in Abhängigkeit von den gemessenen Temperaturen die Zubereitung der Speise steuern. Insbesondere kann die Steuereinrichtung die Heizleistung des Heizleiters 3, also die Stromzufuhr zum Heizleiter, steuern.

Im Speisenzubereitungsgefäß 8 befindet sich ein Misch- und/oder Schneidwerkzeug, das mit einem Motor angetrieben werden kann. Der Motor befindet sich im Standteil 12. Im Grund des Speisenzubereitungsgefäßes 8 ist eine Heizeinrichtung vorhanden, die mit dem Standteil 12 für ein Erhitzen stromleitend verbunden werden kann. Im Standteil ist außerdem der Motor für das Drehen der Arme 10 angeordnet.

Das Standteil 12 weist an seiner Oberseite einen Griff 19 auf. Das Deckelteil 9 weist einen nach oben vorstehenden, ringförmigen Kragen 20 auf.

Die Wand aus Figur 1 kann der Boden des Zubereitungsgefäßes 8 sein. Die Wand aus Figur 1 kann dann in der Mitte einen Durchgang für eine Welle aufweisen. Die Welle kann beispielsweise mit dem Misch- und/ oder Schneidwerkzeug verbunden sein und mit der Welle eines elektrischen Antriebs bzw. Motors verbunden werden, wenn das Zubereitungsgefäß 8 in das Standteil 12 eingesetzt wird.

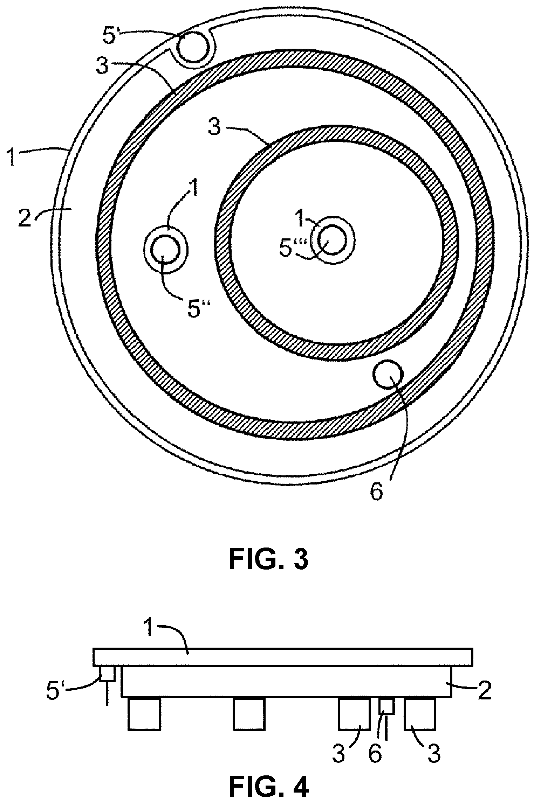

Die Figur 3 zeigt wie im Fall der Figur 1 eine Aufsicht auf eine erste Schicht 1, auf der eine zweite Schicht 2 aufgebracht ist. Zwei schematisch gezeigte Heizleiter 3 sind auf der zweiten Schicht 2 aufgebracht. Jeder Heizleiter 3 verläuft kreisförmig, wobei auf die Darstellung von Kontakten verzichtet worden ist Jeder Heizleiter 3 kann ein elektrischer Rohrheizkörper sein. Es kann sein, dass die beiden Heizleiter unabhängig voneinander bestromt werden können. Ein Heizleiter 3 kann abweichend von der gezeigten Kreisform zumindest abschnittsweise oder vollständig bogenförmig verlaufen, so zum Beispiel wie ein Oval. Ein Heizleiter 3 kann abschnittsweise oder vollständig winkelförmig verlaufen. Ein Heizleiter 3 kann abschnittsweise oder vollständig geradlinig verlaufen. Ein Heizleiter 3 kann also auch zumindest abschnittsweise bogenförmig und/oder zumindest abschnittsweise geradlinig und/oder zumindest abschnittsweise winkelförmig verlaufen.

Der eine Heizleiter 3 weist einen großen Durchmesser bzw. im Fall eines bogenförmigen Verlaufs eine große Ausdehnung auf und zwar im Vergleich zum Durchmesser bzw. der Ausdehnung des anderen Heizleiters 3. Der Heizleiter 3 mit dem kleinen Durchmesser ist innerhalb des anderen Heizleiters 3 außermittig angeordnet. Aufgrund der außermittigen Anordnung gibt es auf der rechts gezeigten Seite einen kleinen Abstand zwischen den beiden Heizleitern 3 und auf der links gezeigten Seite einen großen Abstand zwischen den beiden Heizleitern 3. Der zweite Temperatursensor 6 ist auf der zweiten Schicht 2 zwischen den beiden Heizleitern 3 auf der rechten Seite angeordnet, damit der zweite Temperatursensor 6 einen geringen Abstand zu den beiden Heizleitern 3 aufweist. Der zweite Temperatursensor 6 kann daher eine Temperatur eines Heizleiters 3 auch dann abschätzen, wenn der andere Heizleiter nicht erhitzt wird, also nicht bestromt wird. Der erste Temperatursensor ist so auf der ersten Schicht 1 angeordnet, dass dieser einen großen Abstand zu den beiden Heizleitern 3 aufweist. Es werden drei verschiedene Anordnungen des ersten Temperatursensors gezeigt. Der erste Temperatursensor 5' kann sich also außerhalb der beiden Heizleiter 3 befinden. Der erste Temperatursensor 5' kann also beispielsweise am Rand der Wand angeordnet sein, um möglichst wenig einer Temperatur von Heizleitern 3 ausgesetzt zu sein. Der erste Temperatursensor 5" kann sich mittig zwischen den beiden Heizleiter 3 auf der links gezeigten Seite befinden. Der erste Temperatursensor 5‴ kann sich mittig innerhalb des Heizleiters 3 mit dem kleinen Durchmesser befinden. Es können auch mehrere erste Temperatursensoren 5', 5", 5‴ vorhanden sein, die einen großem Abstand zu Heizleiterbahnen aufweisen und die sich auf der ersten Schicht 1 befinden. Es können auch mehrere zweite Temperatursensoren 6 vorhanden sein, die einen kleinen Abstand zu Heizleiterbahnen aufweisen.

Mit "klein" und "groß" ist gemeint, dass der eine kleine Abstand klein im Vergleich zu dem anderen großen Abstand ist. Entsprechendes gilt für den kleinen und den großen Durchmesser.

Die Figur 4 zeigt einen Schnitt durch das System mit den zwei Schichten 1 und 2 für den Fall, dass es zwei kreisförmige Heizleiter 3 gibt, wie diese in der Figur 3 gezeigt werden. Der erste Temperatursensor 5' ist auf der linken Seite außerhalb der beiden Heizleiter 3 auf der ersten Schicht 1 angeordnet. Der zweite Temperatursensor 6 ist auf der rechten Seite zwischen den beiden Heizleitern 3 auf der zweiten Schicht 2 angeordnet. Die Figur 4 verdeutlicht, dass der erste Temperatursensor 5' in einer anderen Ebene als der zweite Temperatursensor 6 angeordnet ist. Dies trägt dazu bei, dass mit dem ersten Temperatursensor 5' auch während eines Erhitzens der Heizleiter 3 die Temperatur recht genau ermittelt werden kann, denen Lebensmittel während ihrer Zubereitung ausgesetzt werden. Damit dies gut gelingt, kann der an den ersten Temperatursensor 5', 5", 5‴ angrenzende Rand der zweiten Schicht 2 einen deutlichen Abstand zum ersten Temperatursensor 5', 5", 5‴ aufweisen. Dieser Abstand kann mindestens 5 mm oder mindestens 7 mm betragen. Beispielsweise kann eine kreisrunde Öffnung in der zweiten Schicht 2 einen Durchmesser von 20 mm bis 30 mm haben. Der Durchmesser kann beispielsweise 25 mm groß sein. Innerhalb der Öffnung kann ein erster Temperatursensor angeordnet sein, dessen Durchmesser deutlich kleiner ist und beispielsweise kleiner als 14 mm oder kleiner als 10 mm ist.

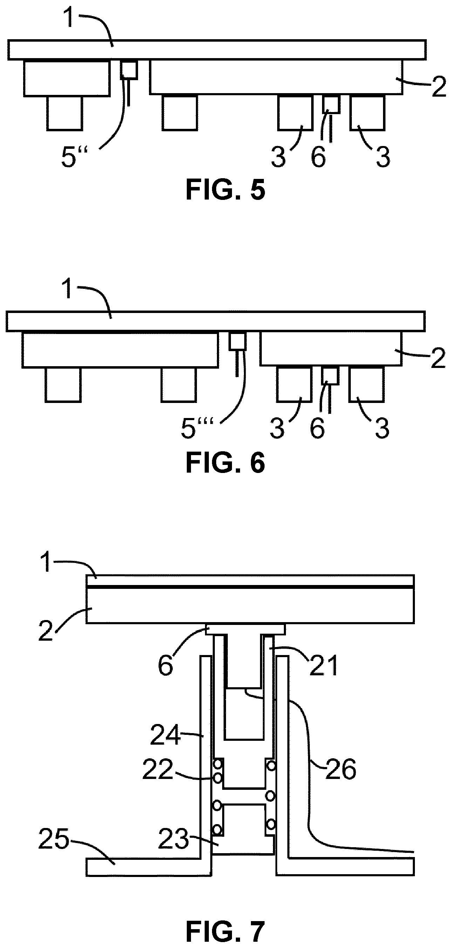

In der Figur 5 wird im Schnitt der Fall skizziert, dass der erste Temperatursensor 5" zwischen den beiden kreisförmigen Heizleitern 3 angeordnet ist, wie dies in der Figur 3 gezeigt wird.

In der Figur 6 wird im Schnitt der Fall skizziert, dass der erste Temperatursensor 5‴ mittig innerhalb des Heizleiters 3, der den kleinen Durchmesser aufweist, angeordnet ist.

Die Figur 7 zeigt in einer Schnittdarstellung einen Ausschnitt einer Wand mit der ersten Schicht 1, der zweiten Schicht 2 und dem zweiten Temperatursensor 6. Der zweite Temperatursensor 6 wird mithilfe eines Stempels 21 und einer vorgespannten Feder gegen die zweite Schicht 2 gedrückt. Der Temperatursensor 6 kann T-förmig sein. Der untere Teil der T-Form kann wie in der Figur 7 gezeigt in eine Ausnehmung des Stempels 21 hineinreichen. Der obere Teil der T-Form liegt dann an der zweiten Schicht 2 an. Das andere Ende des Stempels 21 kann sich stufenförmig verjüngen. Die Feder 22 kann eine Schraubenfeder sein. Ein Ende der Feder 22 kann auf der Stufe des Stempels 21 aufsitzen, wie dies in der Figur 7 gezeigt wird. Das andere Ende der Feder 21 kann gegen eine Kappe 23 abgestützt sein. Die Kappe 23 kann ein stufenförmiges Ende aufweisen. Ein Ende der Schraubenfeder 21 kann gegen die Stufe des stufenförmigen Endes der Kappe 23 abgestützt sein. Ein jedes Ende der Feder 21, welches auf einer Stufe aufsitzt, wird dadurch stabil gehalten.

Die Kappe 23 kann in eine Hülse 24 eingesetzt sein. Die Kappe 23 kann in die Hülse 24 beispielsweise hineingeschraubt sein. Die Kappe 23 kann mit der Hülse 24 verschweißt sein.

Die Hülse 24 kann von einer weiteren Schicht 25 der Wand in Richtung der zweiten Schicht 2 abstehen. Die Hülse 24 kann mit der weiteren Schicht 25 dauerhaft verbunden sein, so zum Beispiel verschweißt sein oder zusammen mit der weiteren Schicht 25 in einem Stück gefertigt worden sein. Die Hülse 24 kann mit der weiteren Schicht 25 beispielsweise verschraubt sein. Der Stempel 21 kann durch die Hülse 24 geführt sein. Die weitere Schicht 25 kann wie die erste Schicht 1 aus Stahl bestehen. Die weitere Schicht 25 kann wie gezeigt eine äußere Schicht der Wand sein.

Über einen elektrischen Leiter 26 kann der Temperatursensor 6 mit der Steuereinrichtung 17 der Küchenmaschine 7 verbunden werden. Der Stempel 21 und die Hülse 24 können Aussparungen aufweisen, durch die der elektrische Leiter 26 hindurchgeführt ist.

In gleicher Weise kann auch ein erster Temperatursensor 5 innerhalb der Wand gehalten sein.

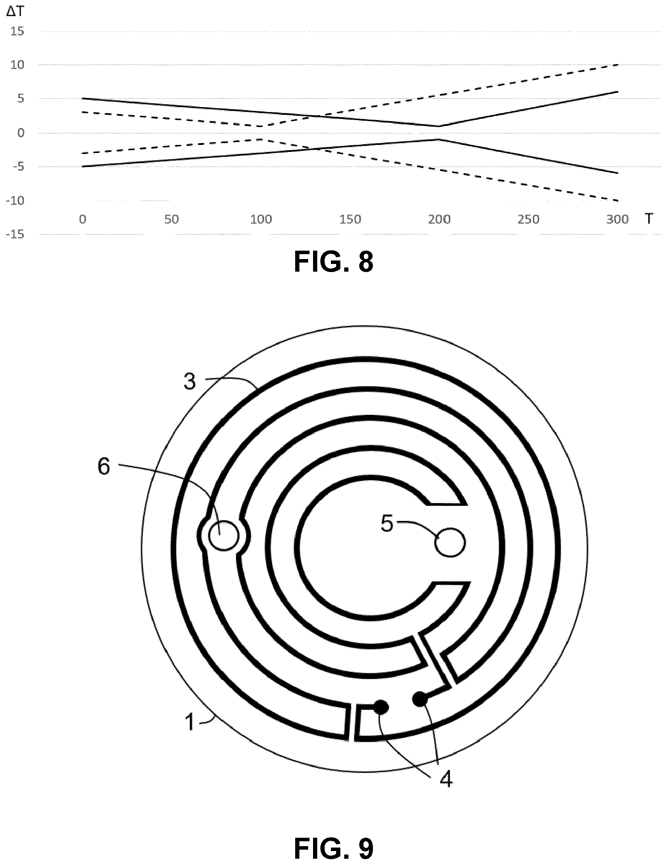

Die Figur 8 verdeutlicht die Messgenauigkeit des ersten Temperatursensors 5 und des zweiten Temperatursensors 5. Aufgetragen ist die Messgenauigkeit ΔT in °C in Abhängigkeit von der Temperatur T in °C. Die gestrichelten Linien verdeutlichen die Messgenauigkeit des ersten Temperatursensors 5. Die durchgezogenen Linien verdeutlichen die Messgenauigkeit des zweiten Temperatursensors 6.

Der erste Temperatursensor 5 ist bei 100°C kalibriert worden. Bei 100°C ist daher die Messgenauigkeit des ersten Temperatursensors 5 am größten und beträgt ±1°C. Bei 300°C beträgt die Messgenauigkeit des ersten Temperatursensors ±10°C. Bei 0°C beträgt die Messgenauigkeit des ersten Temperatursensors ±5°C. Die Messgenauigkeit verschlechtert sich ausgehend von 100°C linear.

Der zweite Temperatursensor 6 ist bei 200°C kalibriert worden. Bei 200°C ist daher die Messgenauigkeit des zweiten Temperatursensors 6 am größten und beträgt ±1°C. Bei 300°C beträgt die Messgenauigkeit des zweiten Temperatursensors ±5°C. Bei 0°C beträgt die Messgenauigkeit des zweiten Temperatursensors ±3°C. Die Messgenauigkeit verschlechtert sich ausgehend von 200°C linear.

Die in der Figur 1 gezeigte zweite Schicht 2 kann entfallen. Trotzdem werden können genannte Vorteile erzielt werden, weil Heizleiterbahnen eines Heizleiters 3 nah an den zweiten Temperatursensor 6 heranreichen, wohingegen der Abstand zwischen dem ersten Temperatursensor 5 und benachbarten Heizleiterbahnen deutlich größer ist. Dieser Fall wird in der Figur 9 gezeigt.

Durch die Erfindung kann die Temperatur der ein oder mehreren Heizleiter, so zum Beispiel eine Rohrheizungstemperatur, sehr genau überwacht werden. Ein nachteilhaftes Überschwingen einer Temperatur kann vermieden werden. Es kann Energie, die beispielsweise u. a. in einer Rohrheizung oder in der zweiten Schicht gespeichert ist, berücksichtigt werden, so zum Beispiel für ein Vermeiden eines Überschwingens einer Temperatur und/oder um Restwärme auszunutzen. Temperaturen können zielgenau über einen großen Temperaturbereich von beispielsweise -30°C bis 225°C eingeregelt werden. Ein zuverlässiger Überhitzungsschutz ist möglich.

**Patentansprüche**

1. Küchengerät für ein Erhitzen von Lebensmitteln mit einer Wand,

   wobei in der Wand ein Heizleiter (3) für ein Erhitzen von Lebensmitteln vorhanden ist, wobei die Wand eine äußere erste Schicht (1) umfasst, wobei sich eine zweite Schicht (2) der Wand zwischen der ersten Schicht (1) und dem Heizleiter (3) befindet, wobei in der Wand ein erster Temperatursensor (5) vorhanden ist, der die erste Schicht (1) kontaktiert, wobei in der Wand ein zweiter Temperatursensor (6) vorhanden ist, der getrennt von der ersten Schicht (1) angeordnet ist,
   und/oder
   wobei die Wand eine äußere erste Schicht (1) sowie in der Wand einen Heizleiter (3), einen ersten Temperatursensor (5) und einen zweiten Temperatursensor (6) umfasst, wobei der Abstand zwischen dem ersten Temperatursensor (5) und dem Heizleiter (3) größer ist als der Abstand zwischen dem zweiten Temperatursensor (6) und dem Heizleiter (3).

2. Küchengerät nach einem der vorhergehenden Ansprüche, **dadurch gekennzeichnet, dass** der zweite Temperatursensor (6) die zweite Schicht (2) kontaktiert oder dass der zweite Temperatursensor (6) nur durch einen elektrischen Isolator von der zweiten Schicht (2) getrennt ist.

3. Küchengerät nach einem der vorhergehenden Ansprüche, **dadurch gekennzeichnet, dass** die Messgenauigkeit des ersten Temperatursensors (5) bei einer ersten Temperatur am größten ist und die Messgenauigkeit des zweiten Temperatursensors (6) bei einer zweiten Temperatur am größten ist, wobei die zweite Temperatur größer als die erste Temperatur ist.

4. Küchengerät nach dem vorhergehenden Anspruch, **dadurch gekennzeichnet, dass** die Differenz zwischen der ersten Temperatur und der zweiten Temperatur mehr als 2°C oder mehr als 4°C beträgt und/ oder dass die Differenz zwischen der ersten Temperatur und der zweiten Temperatur nicht mehr als 20°C oder nicht mehr als 150°C beträgt.

5. Küchengerät nach einem der vorhergehenden Ansprüche, **dadurch gekennzeichnet, dass** der erste Temperatursensor (5) durch eine Feder (22) gegen die erste Schicht (1) gedrückt ist und/oder dass der zweite Temperatursensor (6) durch eine Feder (22) gegen die erste oder die zweite Schicht (1, 2) gedrückt ist.

6. Küchengerät nach einem der vorhergehenden Ansprüche, **dadurch gekennzeichnet, dass** der erste Temperatursensor (5) nicht zwischen zwei Heizleiterbahnen angeordnet ist und/oder am Rand der Wand angeordnet ist.

7. Küchengerät nach einem der vorhergehenden Ansprüche, **dadurch gekennzeichnet, dass** der erste Temperatursensor (5) die zweite Schicht (2) nicht kontaktiert.

8. Küchengerät nach einem der vorhergehenden Ansprüche, **dadurch gekennzeichnet, dass** der zweite Temperatursensor (6) zwischen zwei Heizleiterbahnen angeordnet ist.

9. Küchengerät nach einem der vorhergehenden Ansprüche, **dadurch gekennzeichnet, dass** die erste Schicht (1) aus Stahl besteht und die zweite Schicht (2) aus Kupfer oder Aluminium besteht oder Kupfer oder Aluminium umfasst.

10. Küchengerät nach einem der vorhergehenden Ansprüche, **dadurch gekennzeichnet, dass** eine Steuereinrichtung (17) vorhanden ist, die so eingerichtet ist, dass diese ein Erhitzen durch die Heizleiter (3) in Abhängigkeit von dem ersten Temperatursensor (5) und dem zweiten Temperatursensor (6) regelt.

11. Küchengerät nach dem vorhergehenden Anspruch, **dadurch gekennzeichnet, dass** die Steuereinrichtung (17) so eingerichtet ist, dass diese ein Erhitzen durch den Heizleiter (3) abschaltet, wenn der erste Temperatursensor (5) eine Temperatur oberhalb eines ersten Schwellwerts misst oder wenn der zweite Temperatursensor (6) eine Temperatur oberhalb eines zweiten Schwellwerts misst, wobei der erste Schwellwert kleiner als der zweite Schwellwert ist.

12. Küchengerät nach einem der vorhergehenden Ansprüche, **dadurch gekennzeichnet, dass** die Wärmeleitfähigkeit der zweiten Schicht (2) größer als die Wärmeleitfähigkeit der ersten Schicht (1) ist und/oder dass die zweite Schicht (2) dicker als die erste Schicht (1) ist.

13. Küchengerät nach einem der vorhergehenden Ansprüche, **dadurch gekennzeichnet, dass** das Küchengerät eine Küchenmaschine (7) mit einem Standteil (12), mit einem in das Standteil einsetzbarem Zubereitungsgefäß (8) und mit einer Zerkleinerungs- und/ oder Mischeinrichtung ist, wobei das Zubereitungsgefäß (8) die Wand umfasst, wobei mithilfe der Zerkleinerungs- und/ oder Mischeinrichtung ein im Speisenzubereitungsgefäß (8) befindliches Lebensmittel zerkleinert und/oder gemischt werden kann.

14. Verfahren zur Herstellung eines Küchengeräts (7) mit den Merkmalen nach einem der vorhergehenden Ansprüche, **dadurch gekennzeichnet, dass** der erste Temperatursensor (5) und der zweite Temperatursensor (6) kalibriert werden, wobei die maximale Kalibrierungstemperatur des ersten Temperatursensors (5) kleiner ist als die maximale Kalibrierungstemperatur des zweiten Temperatursensors (6) oder dass die maximale Kalibrierungstemperatur des ersten Temperatursensors (5) zumindest anders ist als die maximale Kalibrierungstemperatur des zweiten Temperatursensors (6).

15. Verfahren nach dem vorhergehenden Anspruch, **dadurch gekennzeichnet, dass** der Arbeitspunkt mit der höchsten Genauigkeit beim ersten Temperatursensor (5) größer ist als beim zweiten Temperatursensor (6).

**FIG. 1**

**FIG. 2**

**FIG. 3**

**FIG. 4**

**FIG. 5**

**FIG. 6**

**FIG. 7**

FIG. 8

FIG. 9

Europäisches
Patentamt

European
Patent Office

Office européen
des brevets

# EUROPÄISCHER RECHERCHENBERICHT

Nummer der Anmeldung

EP 22 21 1419

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2014/029928 A1 (KOEBRICH HOLGER [DE] ET AL) 30. Januar 2014 (2014-01-30) * Absatz [0032] – Absatz [0035]; Abbildung 1 * | 1-15 | INV. H05B3/68 A47J43/04 H05B1/02 |
| X | DE 10 2011 002861 A1 (BSH BOSCH SIEMENS HAUSGERAETE [DE]) 19. Juli 2012 (2012-07-19) * Absatz [0029] – Absatz [0032]; Abbildung 2 * | 1,6,10 | |
| X | GB 2 269 980 A (IST LAB LTD [GB]) 2. März 1994 (1994-03-02) * Seite 3, Zeile 35 – Seite 4, Zeile 36; Abbildung 1 * | 1 | |
| A | US 6 640 692 B1 (HILGERS STEFAN [DE] ET AL) 4. November 2003 (2003-11-04) * Spalte 5, Zeile 32 – Zeile 40; Abbildungen 1,3,4 * | 1-15 | |
| A | DE 10 2008 038783 A1 (VORWERK CO INTERHOLDING [DE]) 18. Februar 2010 (2010-02-18) * Absatz [0053]; Abbildung 3 * | 1-15 | RECHERCHIERTE SACHGEBIETE (IPC) H05B A47J |
| A | US 2021/106171 A1 (TIETZ SEBASTIAN [DE] ET AL) 15. April 2021 (2021-04-15) * Absatz [0124] – Absatz [0125]; Abbildung 2 * | 1-14 | |
| A | US 2018/177340 A1 (KRAUT-REINKOBER STEFAN [DE] ET AL) 28. Juni 2018 (2018-06-28) * Absatz [0056]; Abbildung 1 * | 1-15 | |

-/--

Der vorliegende Recherchenbericht wurde für alle Patentansprüche erstellt

| Recherchenort | Abschlußdatum der Recherche | Prüfer |
|---|---|---|
| München | 2. Mai 2023 | Gea Haupt, Martin |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

...........
& : Mitglied der gleichen Patentfamilie, übereinstimmendes Dokument

EPO FORM 1503 03.82 (P04C03)

Seite 1 von 2

Europäisches Patentamt
European Patent Office
Office européen des brevets

# EUROPÄISCHER RECHERCHENBERICHT

Nummer der Anmeldung

EP 22 21 1419

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | WO 2012/076392 A1 (BSH BOSCH SIEMENS HAUSGERAETE [DE]; BALLY INGO [DE] ET AL.) 14. Juni 2012 (2012-06-14) * Seite 6, Zeile 20 – Seite 7, Zeile 4; Abbildung * ----- | 1-15 | |
| A | DE 10 2010 037769 A1 (VORWERK CO INTERHOLDING [DE]) 29. März 2012 (2012-03-29) * Absatz [0028] – Absatz [0031]; Abbildung 2 * ----- | 1-15 | |

RECHERCHIERTE SACHGEBIETE (IPC)

Der vorliegende Recherchenbericht wurde für alle Patentansprüche erstellt

| Recherchenort | Abschlußdatum der Recherche | Prüfer |
|---|---|---|
| München | 2. Mai 2023 | Gea Haupt, Martin |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
........................................................................
& : Mitglied der gleichen Patentfamilie, übereinstimmendes Dokument

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

**EP 22 21 1419**

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

**02-05-2023**

| Im Recherchenbericht angeführtes Patentdokument | Datum der Veröffentlichung | Mitglied(er) der Patentfamilie | | Datum der Veröffentlichung |
|---|---|---|---|---|
| US 2014029928 A1 | 30-01-2014 | CN | 103702458 A | 02-04-2014 |
| | | DE | 102012213385 A1 | 22-05-2014 |
| | | EP | 2693835 A1 | 05-02-2014 |
| | | ES | 2569707 T3 | 12-05-2016 |
| | | PL | 2693835 T3 | 30-09-2016 |
| | | US | 2014029928 A1 | 30-01-2014 |
| DE 102011002861 A1 | 19-07-2012 | DE | 102011002861 A1 | 19-07-2012 |
| | | EP | 2478816 A2 | 25-07-2012 |
| | | PL | 2478816 T3 | 18-05-2020 |
| GB 2269980 A | 02-03-1994 | AT | 146950 T | 15-01-1997 |
| | | DE | 69307054 T2 | 17-04-1997 |
| | | EP | 0585015 A1 | 02-03-1994 |
| | | ES | 2096870 T3 | 16-03-1997 |
| | | GB | 2269980 A | 02-03-1994 |
| US 6640692 B1 | 04-11-2003 | AT | 255840 T | 15-12-2003 |
| | | AU | 5625201 A | 30-10-2001 |
| | | CN | 1441646 A | 10-09-2003 |
| | | DE | 10019126 A1 | 25-10-2001 |
| | | EP | 1274333 A1 | 15-01-2003 |
| | | ES | 2208593 T3 | 16-06-2004 |
| | | JP | 2004507279 A | 11-03-2004 |
| | | PT | 1274333 E | 30-04-2004 |
| | | US | 6640692 B1 | 04-11-2003 |
| | | WO | 0178569 A1 | 25-10-2001 |
| DE 102008038783 A1 | 18-02-2010 | KEINE | | |
| US 2021106171 A1 | 15-04-2021 | AU | 2020256289 A1 | 29-04-2021 |
| | | CN | 112656234 A | 16-04-2021 |
| | | EP | 3808235 A1 | 21-04-2021 |
| | | US | 2021106171 A1 | 15-04-2021 |
| US 2018177340 A1 | 28-06-2018 | AU | 2018200033 A1 | 12-07-2018 |
| | | CN | 108236351 A | 03-07-2018 |
| | | DE | 102016125678 A1 | 28-06-2018 |
| | | EP | 3338598 A2 | 27-06-2018 |
| | | ES | 2827237 T3 | 20-05-2021 |
| | | PL | 3338598 T3 | 11-01-2021 |
| | | PT | 3338598 T | 07-09-2020 |
| | | TW | 201822693 A | 01-07-2018 |
| | | US | 2018177340 A1 | 28-06-2018 |
| WO 2012076392 A1 | 14-06-2012 | DE | 102010062507 A1 | 14-06-2012 |

EPO FORM P0461

Für nähere Einzelheiten zu diesem Anhang : siehe Amtsblatt des Europäischen Patentamts, Nr.12/82

**Seite 1 von 2**

# EP 4 383 941 A1

**ANHANG ZUM EUROPÄISCHEN RECHERCHENBERICHT**
**ÜBER DIE EUROPÄISCHE PATENTANMELDUNG NR.**

EP 22 21 1419

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

02-05-2023

| Im Recherchenbericht angeführtes Patentdokument | Datum der Veröffentlichung | Mitglied(er) der Patentfamilie | | Datum der Veröffentlichung |
|---|---|---|---|---|
| | | EP | 2649860 A1 | 16-10-2013 |
| | | ES | 2645369 T3 | 05-12-2017 |
| | | PL | 2649860 T3 | 29-12-2017 |
| | | WO | 2012076392 A1 | 14-06-2012 |
| DE 102010037769 A1 | 29-03-2012 | KEINE | | |

EPO FORM P0461

Für nähere Einzelheiten zu diesem Anhang : siehe Amtsblatt des Europäischen Patentamts, Nr.12/82

Seite 2 von 2

19

**EP 4 383 941 A1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 3498136 B1
- WO 2020000052 A1
- EP 3813616 A1